(19) Europäisches Patentamt
European Patent Office
Office européen des brevets

(11) Veröffentlichungsnummer: **0 290 098**
**B1**

# (12) EUROPÄISCHE PATENTSCHRIFT

(45) Veröffentlichungstag der Patentschrift:
14.11.90

(21) Anmeldenummer: 88200868.3

(22) Anmeldetag: 04.05.88

(51) Int. Cl.⁵: **A62D 3/00,** H01F 27/14,
B01D 11/04

(54) Verfahren und Vorrichtung zum Extrahieren von Oel oder polychloriertem Biphenyl aus imprägnierten elektrischen Teilen mittels eines Lösungsmittels sowie Destillation des Lösungsmittels.

(30) Priorität: 07.05.87 CH 1740/87

(43) Veröffentlichungstag der Anmeldung:
09.11.88 Patentblatt 88/45

(45) Bekanntmachung des Hinweises auf die Patenterteilung:
14.11.90 Patentblatt 90/46

(84) Benannte Vertragsstaaten:
CH DE FR GB IT LI SE

(56) Entgegenhaltungen:
EP-A- 0 098 811
EP-A- 0 221 028
DE-C- 2 756 298
DE-C- 3 038 493
US-A- 4 425 949

(73) Patentinhaber: MICAFIL AG, Badenerstrasse Nr.780,
CH-8048 Zürich(CH)

(72) Erfinder: Oesch, Gustav, Hofwiesenstrasse 257,
CH-8057 Zürich(CH)
Erfinder: Gmeiner, Paul, Lettenstrasse 309,
CH-8966 Lieli(CH)
Erfinder: Hofer, Urs, Zurlindenstrasse 192,
CH-8003 Zürich(CH)

(74) Vertreter: Kaiser, Helmut, Dr. et al, Asea Brown Boveri
AG TEI-Immaterialgüterrecht Wiesenstrasse 26,
CH-5401 Baden(CH)

Beschreibung

Die Erfindung betrifft ein Verfahren zum Extrahieren von Oel- oder polychloriertem Biphenyl aus einer Oel- oder polychloriertes Biphenyl enthaltenden dielektrischen Flüssigkeit mittels eines leicht flüchtigen Lösungsmittels und zur Destillation des anfallenden Oel- oder FPC-Lösungsmittel-Gemisches gemäss dem Oberbegriff des Patentanspruchs 1, sowie eine dazu geeignete Vorrichtung.

Es sind sogenannte Askarel-Transformatoren und -Kondensaroren bekannt, bei welchen ein flüssiges Dielektrikum zur Anwendung kommt, das polychloriertes Biphenyl enthält. Da dieses nicht brennbare polychlorierte Biphenyl biologisch schwer abbaubar ist und zudem bei einem Umgebungsbrand in einem bestimmten Temperaturbereich durch pyrogene Zersetzung des polychlorierten Biphenyls hochgiftige Polychlordibenzofurane und Polychlorbidenzodioxine entstehen können, müssen derartige Apparate in nächster Zeit ersetzt bzw. mit einer ungefährlichen dielektrischen Ersatzflüssigkeit aufgefüllt werden.

Um dies zu erreichen ist beispielsweise gemäss dem Europäischen Patent EP 0147 860 ein Verfahren zum Austausch eines polychloriertes Biphenyl (dort und hier im folgenden PCB genannt) enthaltenden Imprägniermittels gegen eine PCB-freie hochsiedende dielektrische Flüssigkeit bekannt. Das Verfahren kommt beispielsweise bei einer Induktionsanlage zur Anwendung, bei der die elektrische Wicklung mit einer porösen celluloseartigen elektrischen Isolation in einem Behälter in einer PCB-haltigen Imprägnierflüssigkeit eingetaucht ist. Zunächst wird diese Imprägnierflüssigkeit abgelassen, um den Hauptteil der PCB-haltigen Flüssigkeit zu entfernen. In den Behälter wird eine PCB-freie dielektrische Flüssigkeit als Zwischenmedium eingefüllt, das mit PCB mischbar ist und welche eine ausreichend niedere Viskositätbesitzt, um in den Behälter zu fliessen und in die Zwischenräume der porösen elektrischen Isolation einzudringen. Nun wird die Induktionsanlage in Betrieb genommen und ausreichend lang betrieben, um PCB aus dem PCB-haltigen Imprägniermittel, welches sich in der porösen Isolation befindet, herauszuwaschen und in das Zwischenmedium aufzunehmen. Nachfolgen wird das Zwischenmedium, welches das aus dem Behälter ausgewaschene PCB enthält, abgelassen.Diese Verfahrensstufen werden mehrmals wiederholt, bis die Isolation entsprechend gereinigt ist und schliesslich eine PCB-freie dielektrische permanente Flüssigkeit eingefüllt wird, um die elektrische Anlage als PCB-freie klasifizieren zu können.

Bei ölimprägnierten Apparaten, beispielsweise Transformatoren, enthält die Isolation Oel. Bei einer Kondensations-Trocknungsvorrichtung gemäss dem deutschen Patent 27 56 298 wird bei der Trocknung aus der Isolation nicht nur Wasser entzogen, sondern auch die schwerer siedende Flüssigkeit, beispielsweise Oel, entfernt. Der in einem Autoklaven zu reinigende Transformator wird mittels Kondensationswärme eines Lösungsmittels aufgeheizt und im Verlaufe der Aufheizung vermischt sich das Lösungsmittel mit dem aus der Isolation herausgelösten Oel.

Da sich das aus dem zu reinigenden elektrischen Apparat herausgelöste PCB oder Oel in dem in Autoklaven (Behälter) vorhandene Lösungsmittel löst, musste bisher das Oel- oder PCB-Lösungsmittel-Gemisch aus dem Autoklaven abgelassen und neues Lösungsmittel eingefüllt werden, um eine optimale Kondensation des Lösungsmittels am Apparat und somit ein Herauslösen des schwerer siedenden PCBs oder Oels aus dem Apparat, insbesondere dessen Isolation, zu gewährleisten, und das abgelassene Gemisch musste durch Destillation wieder aufbereitet werden.

Es ist auch eine Anlage zum Aufheizen und Trocknen von papierisolierten elektrotechnischen Teilen gemäss dem deutschen Patent DE 30 38 493 bekannt, bei der eine Trennung der leicht- und schwersiedenden Bestandteile der verunreinigten Heizflüssigkeit durchgeführt wird, indem die Verdampfung der Heizflüssigkeit und für die Trennung des Dampfes derselben von den schwersiedenden Bestandteilen ein Dünnschichtverdampfer zusätzlich eingesetzt wird.

Ein Nachteil besteht insbesondere darin, dass zu einem Verdampfer ein Nachverdampfer, die beide ausserhalb des Trochnungskessels angeordnet sind, erforderlich ist.

Die Aufgabe der in Ansprüchen 1 bis 9 angegebenen Erfindung besteht nun darin, die bereits bekannten Verfahren zum Reinigen von Oel- oder PCB-imprägnierten elektrischen Apparaten durch Ausnützung der Kondensationswärme des Lösungsmittels so zu erweitern, dass eine Abdestillation des Lösungsmittels vom Oel- oder PCB-Lösungsmittel-Gemisches ohne Zeit- und Energieverluste und ohne zusätzliche separate aufwendige Destillationseinrichtungen erfolgen kann.

Der Vorteil des erfindungsgemässen Verfahrens besteht insbesondere darin, dass während den in der Aufheizphase zeitlich genau befinierten Zwischendruckabsenkungen des Reinigungsprozesses eine Umwälzung des Oel- oder PCB-Losungsmittel-Gemisches über den beheizten Verdampfer weiterhin erfolgt, so dass gleichzeitig das im Autoklaven für die Zwischendruckabsenkungen erforderliche Vakuum auch für die Abdestillieren des Lösungsmittels verwendet wird.

Ein weiterer Vorteil besteht darin, dass sowohl das für die Renigung eingesetzte Lösungsmitel als auch das ausschliesslich in flüssiger Form anfallende Oel wiederverwendbar sind, bzw. das abgetrennte PCB in entsprechender Anlage ohne Schwierigkeiten verbrannt und somit unschädlich gemacht werden kann.

In der Zeichnung ist ein Ausführungsbeispiel der Erfindung vereinfacht dargestellt.

Es zeigt

Fig.1 ein Prinzipschema eine erfindungsgemässen Extraktions- und Abdestilliervorrichtung und

Fig.2 einen schematisch dargestellten Prozessablauf der Vorrichtung gemäss Fig.1.

Ein Autoklav ist mit der Bezugszahl (1) bezeichnet. Eine Verdampfereinrichtung (2,3,4,m) besteht aus mindestens einem Verdampfer, beispielsweise einem Filmverdampfer (2), der über eine Heizleitung (m) mit einer Heizeinrichtung (4) verbunden ist. Der Filmverdampfer (2) ist an einer Innenwand des Autoklaven (1) vertikal angeordnet und auf ihrer dem Reinigungsgut (14), beispielsweise Transformatoren und/oder Kondensatoren, zugewandten Seite mit einer Trennwand (3) versehen. Der Autoklav (1) mit dem Filmverdampfer (2) ist über eine Dampfableitung (a) mit einem Dampfkondensator (5) verbunden, der wiederum über eine Kondensatableitung (b) und einen in dieser angeordneten Abscheider (6) und eine erste Förderpumpe (8) über eine Rückleitung (e) zurück zum Autoklav (1) verbunden ist. Aus der Rückleitung (e) in den Autoklaven (1) mundet oberhalb des Reinigungsgutes (14) eine Sprühleitung (e'). Eine mit dem Autoklaven (1) verbundene Umwälzleitung (zusätlich strichliert dargestellt) führt aus dem Autoklaven (1) über eine Kondensatableitung (d) mit einem dazwischen angeordneten Kondensatsammelbehälter (9) und einer zweiten Förderpump (10) weiter über die in den Autoklaven (1) zu dem Filmverdampfer (2) führende Rückleitung (e). Die Kondensatableitung (d) ist hilfsweise auch über die erste Förderpumpe (8) mit der Rückleitung (e) Verbunden. Das im Abscheider (6) abgetrennte Wasser wird über eine mit einem Ventil (7) versehene Abflussleitung (i) abgeführt. Es ist eine aus verschiedenen bekannten Komponenten gebildete Vakuumeinrichtung (11) vorgesehen, die einmal mit dem Dampfkondensator (5) über eine Vakuumleitung (k) und weiter über die Dampfableitung (a) mit dem Autoklaven (1) und zum anderen über eine Kondensatableitung (c) mit dem Abscheider (6) verbunden ist.

Eine Verbindungsleitung (f) verbindet einen ersten Vorratsbehälter (12) für das Lösungsmittel über die Rückleitung (e) mit dem im Autoklaven (1) angeordneten Filmverdampfer (2) und ist zusätzlich über eine Verbindungsleitung (h) mit dem Abscheider (6) des Dampfkondensators (5) verbunden. Von einem zweiten Vorratsbehälter (13) für das Oel oder PCB führt eine Verbindungsleitung (g) über die Kondensatableitung (d) und den Kondensatsammelbehälter (9) zum Autoklaven (1).

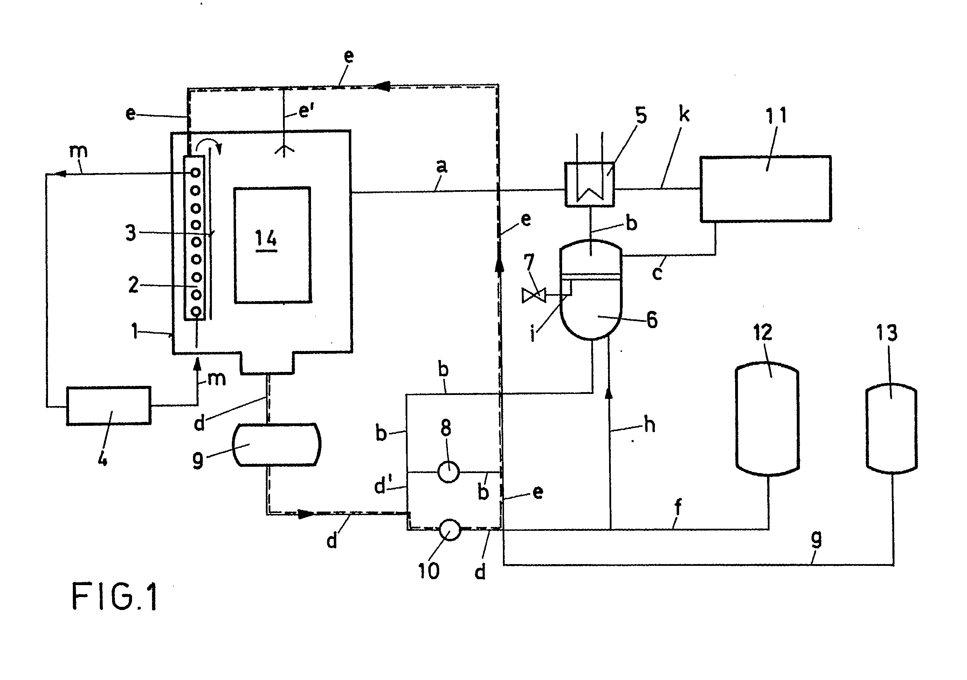

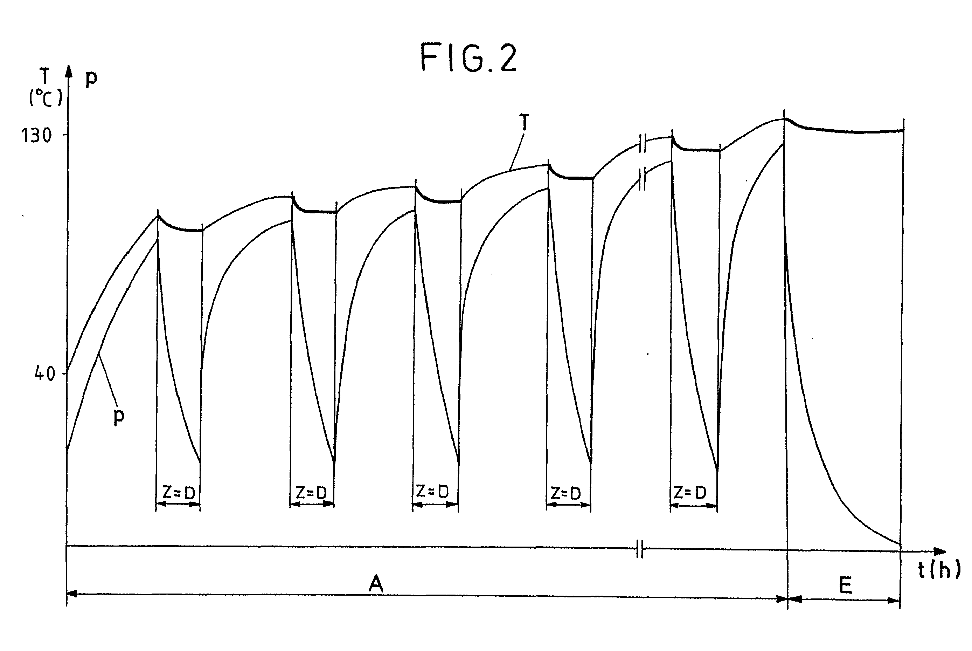

Zur Erläuterung der Wirkungsweise seien Fig.1 und Fig.2 näher betrachtet.

In dem Filmverdampfer (2) verdampft das auf eine Temperatur zwischen 40 und 130°C aufgeheizte Lösungsmittel und kondensiert am Reinigungsgut (14). Durch die Kondensation des Lösungsmittels an den zu reinigenden Teilen, insbesondere der elektrischen Isolation, werden diese erwärmt und gleichzeitig löst der daran kondensierende Lösungsmitteldampf das Oel oder PCB aus der Isolation heraus, wobei mit zunehmender Temperatur das Oel oder das relativ hochviskose PCB dünnflüssiger und somit leichter aus der Isolation herauslösbar ist. Gleichzeitig werden dabei auch die metallischen Oberflächen vom daren haftenden Oel oder PCB 53zbefreit. Das Lösungsmittel kann aus dem Vorratsbehälter (12) über die Verbindungsleitungen (f, h) in den Abscheider (6) abgezogen werden.

Der aus der zu reinigenden Isolation entweichende Wasserdampf sowie ein Teil des Lösungsmitteldampfes wird über die Dampfableitung (a) aus dem Autoklaven (1) abgeführt und kondensiert im Dampfkondensator (5) bei einem Druck von 50 bis 100 mbar, wobei die beiden Flüssigkeiten im Abscheider (6) voneinander getrennt werden. Das Lösungsmittel wird sodann durch die erste Förderpumpe (8) über die Kondensatableitung (b) und die Rückleitung (e) dem Filmverdampfer (2) zugeleitet.

Während dieser Aufheiz-/Extraktionsphase werden mehrere aus der Fig.2 ersichtliche Zwischendruckabsenkungen (Z) im Autoklaven (1) durchgeführt, indem jeweils die Lösungsmittel-Zuführung vom Abscheider (6) in den Filmverdampfer (2) unterbrochen wird. Dadurch wird der über die Dampfableitung (a) bestimmte Druck im Autoklaven (1) in den Bereich zwischen 1 und 100 mbar abgesenkt. Während jeder Zwischendruckabsenkung (Z) verläuft gleichzeitig eine Detillationsphase (D), in welcher durch Umwälzung des im Autoklaven (1) sowie im Kondensatsammelbehälter (9) vorhandenen Oeloder PCB-Lösungsmittel-Gemisches über den beheizten Filmverdampfer (2) ein Abdestillieren des Lösungsmitteldampfes durch die Dampfableitung (a) und eine Kondensation des Lösungsmitteldampfes im Dampfkondensator (5) erfolgt. Das Oel- oder PCB-Lösungsmittel-Gemisch wird aus dem Autoklaven (1) über die Kondensatableitung (d) mit den dazwischengeschalteten Kondensatsammelbehälter (9) durch die zweite Förderpumpe (10) und weiter über die Rückleitung (e) zurück in den im Autoklaven (1) angeordneten beheizten Filmverdampfer (2) umgewälzt. Nach Beendigung jeder Zwischendruckabsenkung (Z) wird das im Kondesatsammelbehälter (9) vorhandene reine Oel oder PCB mit der zweiten Förmerpump (10) über die Verbindungsleitung (g) in den Vorratsbehälter (13) abgepumpt. Weiter wird nach jeder Zwischendruckabsenkung (Z) und dem Abdestillieren des Lösungsmittels das am Reinigungsgut (14) noch vorhandene relativ hochviskose Oel oder PCB durch Zuführung des Lösungsmittels über eine Sprühleitung (e') verdünnt und das Reinigungsgut (14) gleichzeitig abgekühlt.

Nach Beendigung der Aufheiz-/Extraktionsphase wird die Lösungsmittel-Zuführung über die erste Förderpumpe (8) in den Filmverdampfer (2) unterbrochen und es erfolgt eine Enddruckabsenkung mit anschliessender Endvakuumphase (E) im Autoklaven (1). Das in das Reinigungsgut (14), insbesondere Isolation, eingedrungene Lösungsmittel verdampft und wird aus dem Autoklaven (1) über die Dampfableitung (a) abgeführt, um in dem Dampfkondensator (5) und in den Kondensatoren der Vakuumeinrichtung (11) zu kondensieren.

**Patentansprüche**

1.Verfahren zum Extrahieren von Oel oder polychloriertem Biphenyl (PCB) aus einer mit Oel- oder PCB-haltigen dielektrischen Flüssigkeit imprägnierten elektrischen Isolation, insbesondere von Transformatoren und/oder Kondensatoren, mittels eines leicht flüchtigen Lösungsmittels sowie zur Destillation des Lösungsmittels aus dem Oel- oder PCB-Lösungsmittel-Gemisch, bei dem in einem zuvor evakuierten Autoklaven mit darin befindlichen zu reinigenden Teilen das leicht flüchtige Lösungsmittel in einer Aufheisphase in mindestens einem im Autoklaven angeordneten Verdampfer verdampft, des Lösungsmitteldampf an den Teilen kondensiert und diese erwärmt und dabei in die elektrische Isolation eindringt und durch die Kondensationswärme das Lösungsmittel das Oel oder polychlorierte Biphenyl aus der elektrischen Isolation herauslöst, dadurch gekennzeichnet, dass in der Aufheizphase im Autoklaven (1) mehrere Zwischendruckabsendkungen (Z) durchgeführt werden und während jeder Zwischendruckabsenkung (Z) zur gleichzeitigen Durchführung einer Destillationsphase (D), bei welcher das leicht flüchtige Lösungsmittel aus dem Oel- oder PCB-Lösungsmittel-Gemisch direkt aus dem Autoklaven (1) abdestilliert wird, die Lösungsmittelzufuhr abgesperrt und das Gemisch umgewälzt wird.

2.Verfahren nach Anspruch 1, dadurch gekennzeichnet, dass durch jede Zwischendruckabsenkung (Z) der Druck im Autoklaven (1) auf zwischen 100 bis 1 mbar absinkt.

3. Verfahren nach Anspruch 1, dadurch gekennzeichnet, dass während jeder Zwischendruckabsenkung (Z) die Umwälzung des im Autoklaven (1) befindlichen und in einem Kondensatsammelbehälter (9) kondensierten Oel- oder PCB-Lösungsmittel-Gemisches über eine Kondensatableitung (d), eine in dieser angeordnete Förderpumpe (10) und eine Rückleitung (e) über den Verdampfer (2) zurück in den Autoklaven (17 erfolgt.

4. Verfahren nach Anspruch 1, dadurch gekennzeichnet, dass als Verdampfer mindestens ein Filmverdampfer (2) verwendet wird.

5. Verfahren nach einem der Ansprüche 1 bis 4, dadurch gekennzeichnet, das als leicht flüchtiges Lösungsmittel ein Kohlenwasserstoffderivat, vorzugsweise eine chloriertes Kohlenwasserstoff-Solvent, verwendet wird.

6. Verfahren nach einem der Ansprüche 1 bis 4, dadurch gekennzeichnet, dass als leicht flüchtiges Lösungsmittel ein halogenierter Kohlenwasserstoff, vorzugsweise Tetrachloräthylen, verwendet wird.

7. Verfahren nach Anspruch 1, dadurch gekennzeichnet, dass nach jeder Zwischendruckabsenkung (Z) zum Verdünnen des Oels oder polychlorierten Biphenyls sowie zum Abkühlen des Reinigungsgutes (14) das Lösungsmittel über eine Sprühleitung (e') in den Autoklaven (1) zugeführt wird.

8. Vorrichtung zur Durchführung des Verfahrens nach Anspruch 1, mit mindestens einem von einer Heizeinrichtung(4) über eine Heizleitung (m) beheizbaren im Autoklaven (1) angeordneten Verdampfer (2) und einer Vakuumeinrichtung, dadurch gekennzeichnet, dass über den Verdampfer (2) und den Autoklaven (1) eine Umwälzleitung (d-9-d-10-d-e) vorgesehen ist, die während jeder Zwischendruckabsenkung (Z) zum Abdestillierten des Lösungsmittels aus dem Oel- oder PCB-Lösungsmittel-Gemisches zuschaltbar ist.

9. Vorrichtung nach Anspruch 8, dadurch gekennzeichnet, dass die Umwälzleitung aus einer aus dem Autoklaven (1) führenden Kondensatableitung (d) mit einem dazwischen geschalteten Kondensatsammelbehälter (9) mit einer Förderpump (10), sowie einer zu dem Verdampfer (2) führenden Rückleitung (e) besteht.

**Revendications**

1. Procédé pour extraire l'huile ou le biphényle polychloré (PCB) d'un isolant électrique imprégné de liquide diélectrique contenant de l'huile ou du PCB, en particulier de transformateurs et/ou de condensateurs, au moyen d'un solvant facilement volatil, de même que pour séparer par distillation le solvant du mélange d'huile ou de PCB et de solvant, suivant lequel, dans un autoclave préalablement évacué contenant les pièces à nettoyer, le solvant facilement volatil est évaporé au cours d'une phase de chauffage dans au moins un évaporateur agencé dans l'autoclave, la vapeur de solvant est condensée sur les pièces et chauffe celles-ci et pénètre ainsi dans l'isolant électrique, et le solvant dissout, par la chaleur de condensation, l'huile ou le biphényle polychloré de l'isolant électrique, caractérisé en ce que, pendant la phase de chauffage dans l'autoclave (1), plusieurs baisses de pressions intermédiaires (Z) sont exécutées et pendant chaque baisse de pression intermédiaire (Z) en vue de l'exécution simultanée d'une phase de distillation (D), au cours de laquelle le solvant facilement volatil est chassé par distillation directement hors de l'autoclave à partir du mélange d'huile ou de PCB et de solvant, l'apport de solvant est interrompu et le mélange est recyclé.

2. Procédé suivant la revendication 1, caractérisé en ce que sous l'effet de chaque baisse de pression intermédiaire (Z), la pression dans l'autoclave (1) baisse jusqu'entre 100 et 1 millibars.

3. Procédé suivant la revendication 1, caractérisé en ce que pendant chaque baisse de pression intermédiaire (Z), le recyclage du mélange d'huile ou de PCB et de solvant se trouvant dans l'autoclave (1) et condensé dans un collecteur de condensat (9) se fait par une conduite d'évacuation de condensat (d), une pompe de circulation (10) agencée dans cette dernière et une conduite de retour (e) en passant par l'évaporateur (2) pour revenir dans l'autoclave (1).

4. Procédé suivant la revendication 1, caractérise en ce qu'au moins un évaporateur pelliculaire (2) est utilisé comme évaporateur.

5. Procédé suivant l'une quelconque des revendications 1 à 4, caractérisé en ce qu'un dérivé d'hydrocarbure, de préférence un solvant hydrocarboné chloré, est utilisé comme solvant facilement volatil.

6. Procédé suivant l'une quelconque des revendications 1 à 4, caractérisé en ce qu'un hydrocarbure halogéné, de préférence le tétrachloréthylène, est utilisé comme solvant facilement volatil.

7. Procédé suivant la revendication 1, caractérisé en ce qu'après chaque baisse de pression intermédiaire (Z), le solvant est introduit par une conduite de pulvérisation (e') dans l'autoclave (1) en vue de diluer l'huile ou le biphényle polychloré et aussi de refroidir le matériel à nettoyer (14).

8. Appareil pour l'exécution du procédé suivant la revendication 1, comprenant au moins un évaporateur (2) agencé dans l'autoclave (1) et pouvant être chauffé à l'aide d'un dispositif de chauffage (4) par l'intermédiaire d'une conduite de chauffage (m) et un dispositif à vide, caractérisé en ce qu'il est prévu une conduite de recyclage (d-9-d-10-d-e) passant par l'évaporateur (2) et l'autoclave (1), qui peut être mise en service pendant chaque baisse de pression intermédiaire (Z) pour séparer par distillation le solvant du melange d'huile ou de PCB et de solvant.

9. Appareil suivant la revendication 8, caractérisé en ce que la conduite de recyclage consiste en une conduite d'évacuation de condensat (d) menant hors de l'autoclave (1) avec un collecteur de condensat (9) monté en position intermédiaire avec une pompe de circulation (10), de même qu'en une conduite de retour (e) menant à l'évaporateur (2).

**Claims**

1. Process for the extraction of oil or polychlorinated biphenyl (PCB) from an electrical insulation impregnated with an oil- or PCB-containing dielectric fluid, especially an insulation of transformers and/or capacitors, by means of a highly volatile solvent, and for the distillation of the solvent out of the oil/solvent or PCB/solvent mixture, the highly volatile solvent being evaporated during a heating-up phase in a previously evacuated autoclave, in which parts to be cleaned are present, in at least one evaporator located in the autoclave, the solvent vapour condensing on the parts and heating them and thus penetrating into the electrical insulation, and the solvent dissolving the oil or polychlorinated biphenyl out of the electrical insulation as a result of the heat of condensation, characterized in that several intermediate pressure reductions (Z) in the autoclave (1) are carried out in the heating-up phase and, during each intermediate pressure reduction (Z), the solvent feed is blocked off and the mixture is circulated for simultaneously carrying out a distillation phase (D), in which the highly volatile solvent is distilled off from the oil/solvent or PCB/solvent mixture directly out of the autoclave (1).

2. Process according to Claim 1, characterized in that the pressure in the autoclave (1) is reduced to between 100 and 1 mbar by each intermediate pressure reduction (Z).

3. Process according to Claim 1, characterized in that, during each intermediate pressure reduction (Z), the circulation of the oil/solvent or PCB/solvent mixture present in the autoclave (1) and condensed in a condensate receiver (9) takes place via a condensate exit line (d), a delivery pump (10) located therein and a return line (e) via the evaporator (2) back into the autoclave (1).

4. Process according to Claim 1, characterized in that at least one film evaporator (2) is used as an evaporator.

5. Process according to one of Claims 1 to 4, characterized in that a hydrocarbon derivative, preferably a chlorinated hydrocarbon solvent, is used as the highly volatile solvent.

6. Process according to one of Claims 1 to 4, characterized in that a halogenated hydrocarbon, preferably tetrachloroethylene, is used as the highly volatile solvent.

7. Process according to Claim 1, characterized in that, after each intermediate pressure reduction (Z), the solvent is fed via a spray line (e') into the autoclave (1) for diluting the oil or polychlorinated biphenyl and for cooling the material (14) being cleaned.

8. Equipment for carrying out the process according to Claim 1, having at least one evaporator (2), which is located in the autoclave (1) and can be heated by a heating device (4) via a heating line (m), and a vacuum device, characterized in that a circulation line (d-9-d-10-d-e) via the evaporator (2) and the autoclave (1) is provided, which circulation line can be connected in during each intermediate pressure reduction (Z) for distilling off the solvent from the oil/solvent or PCB/solvent mixture.

9. Equipment according to Claim 8, characterized in that the circulation line consists of a condensate exit line (d) leading out of the autoclave (1) and having an interposed condensate receiver (9) with a delivery pump (10) and of a return line (e) leading to the evaporator (2).

FIG.1

EP 0 290 098 B1

FIG.2